# EUROPEAN PATENT APPLICATION

(11) **EP 4 641 249 A1**
(43) Date of publication of application: **29.10.2025**
(21) Application number: 25170321.1
(22) Date of filing: 14.04.2025
(51) Int. Cl.: G01S 7/41, G01S 13/89, G01S 13/95, G01S 13/935, G01S 13/937

(54) **WEATHER RADAR SYSTEM INCORPORATING GEOGRAPHIC TERRAIN/FOLIAGE CLASSIFICATION DATABASE/WATER INFORMATION TO ENHANCE CLUTTER WEATHER DISCRIMINATION**

(30) Priority: 25.04.2024 US 202418646161
(71) Applicant: Honeywell International Inc., Charlotte, NC 28202 (US)
(72) Inventor: GLAZE, Patrick K., Charlotte, 28202 (US); BUNCH, Brian P., Charlotte, 28202 (US); WANG, Lin, Charlotte, 28202 (US); WINSTEAD, Benjamin J., Charlotte, 28202 (US)
(74) Representative: Haseltine Lake Kempner LLP

(57) **Abstract**

Techniques to accurately display and identify reflected radar returns for a radar system. Processing circuitry of a radar system, such as an airborne weather radar system, may apportion the returned energy from transmitted radar signals to a ground map or to a weather display. The radar system of this disclosure may include databases with a digital elevation model and terrain type. Different terrain and foliage types may have different radar cross sections and therefore different returned energy to the radar system with different reflectivity characteristics. The radar system may discriminate between clutter and weather such that the radar cross section of water is used to discriminate and apportion returned radar energy when over water. In this manner the radar system of this disclosure may correctly display weather, terrain, and water to resolve ambiguity.

## Description

### TECHNICAL FIELD

The disclosure relates to airborne weather radar.

### BACKGROUND

Radar systems may be used by vehicle, ground installations or other vehicles to detect weather, other vehicle in the surrounding airspace, and other objects in the surrounding airspace. Some weather radars use mechanically or electronically scanned radar transmission pencil beams in a systematic process of progressively covering an area, such as by raster scan. Weather radar may include filtering and classification functions to distinguish received radar reflections. Such filtering and classification functions may provide the user an indication that the reflected returns are from weather, e.g., precipitation, or from terrain or water.

### SUMMARY

In general, the disclosure describes techniques to accurately display and identify reflected radar returns for a radar system. Processing circuitry of a radar system, such as an airborne weather radar system, may apportion the returned energy from transmitted radar signals, for example, to one or more of a ground map or to a weather display. In some examples, the radar system of this disclosure may include a digital elevation model, which may include a terrain type. Different terrain and foliage types may have different radar cross sections and therefore different returned energy to the radar system with different reflectivity characteristics. Similarly, in some examples, the radar system of this disclosure may discriminate between clutter and weather such that the radar cross section of water is used to discriminate and apportion returned radar energy when over water rather than a default value for both terrain and water. In this manner, the radar system of this disclosure may correctly display weather, terrain, and water to resolve ambiguity, e.g., at longer ranges from the radar system.

In one example, the disclosure is directed to a radar system configured to be installed in a vehicle, the radar system comprising: a radar antenna configured to transmit radar energy and receive reflected radar energy from the transmitted radar energy; processing circuitry configured to: receive an indication of the reflected radar energy; process the reflected radar energy to determine characteristics of the reflected radar energy; retrieve information from a database comprising terrain type information; compare the determined characteristics of the reflected radar energy to the retrieved information from the database; based at least on the characteristics of the reflected radar energy and the comparison of the determined characteristics of the reflected radar energy to the retrieved information from the database, apportion the reflected radar energy to at least one of a ground map or a weather display.

In another example, the disclosure is directed to a non-transitory computer-readable storage medium comprising instructions that, when executed, cause processing circuitry of a computing device to: control a radar transmitter to transmit radar energy via a radar antenna; receive reflected radar energy from the transmitted radar energy; process the reflected radar energy to determine characteristics of the reflected radar energy; retrieve information from a database comprising terrain type information; compare the determined characteristics of the reflected radar energy to the retrieved information from the database; based on both the characteristics of the reflected radar energy and the comparison of the determined characteristics of the reflected radar energy to the retrieved information from the database, apportion the reflected radar energy to at least one of a ground map or a weather display.

In another example, the disclosure is directed to a method comprising: controlling, by processing circuitry of radar system, a radar transmitter to transmit radar energy via a radar antenna; receiving reflected radar energy from the transmitted radar energy; processing the reflected radar energy to determine characteristics of the reflected radar energy; retrieving information from a database comprising terrain type information; comparing the determined characteristics of the reflected radar energy to the retrieved information from the database; based on both the characteristics of the reflected radar energy and the comparison of the determined characteristics of the reflected radar energy to the retrieved information from the database, apportioning the reflected radar energy to at least one of a ground map or a weather display.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example of an vehicle with a weather radar system in the vicinity of a variety of terrain types and weather.
FIG. 2 is a block diagram illustrating an example system configured to distinguish and display indications of weather and terrain based on reflected radar return signals.
FIG. 3 is a flowchart illustrating an example operation of the system of this disclosure.

### DETAILED DESCRIPTION

Reflected radar returns from a weather radar system in the vicinity of a variety of terrain types and weather may be classified and displayed to assist a vehicle operator in making decisions. Processing circuitry of a radar system, such as an airborne weather radar system, may apportion the returned energy from transmitted radar signals to at least one of a ground map or to a weather display. In some examples, weather radar systems may misclassify the reflected radar returns by misclassifying some weather as ground clutter and some ground clutter as weather. Misclassification may result in terrain returns bleeding through into the weather display buffer or conversely weather appearing in the ground map. Such misclassification may be more prevalent at mid-ranges, e.g., between 60 nautical miles (nm) and the radar horizon because the radar returns may be contaminated with ground clutter.

Some weather radar systems may incorporate a digital elevation model (DEM), e.g., digital representation of the bare earth topographic surface of the Earth excluding trees, buildings, and any other surface objects. The processing circuitry of the weather radar system may compare reflected radar returns and information in the DEM to help differentiate between terrain and weather.

The radar system of this disclosure may include a DEM, and also add a terrain type database. Different terrain and foliage types may have different radar cross sections and therefore different returned energy to the radar system with different reflectivity characteristics. In addition to the DEM, the weather radar system of this disclosure may use the terrain type information to refine the apportionment of reflected radar returns, e.g., between weather, ground, and clutter. Also, the weather radar system of this disclosure may include the location of water, and the "sea state" of the water to discriminate between clutter and weather. In other words, processing circuitry may include information about the radar cross section of water to discriminate and apportion returned radar energy when over water rather than a default value for both terrain and water. In this manner, the additional terrain type, including water and radar cross section of the water, may positively affect the ability of the radar system to correctly display weather and terrain and to resolve ambiguity at longer ranges.

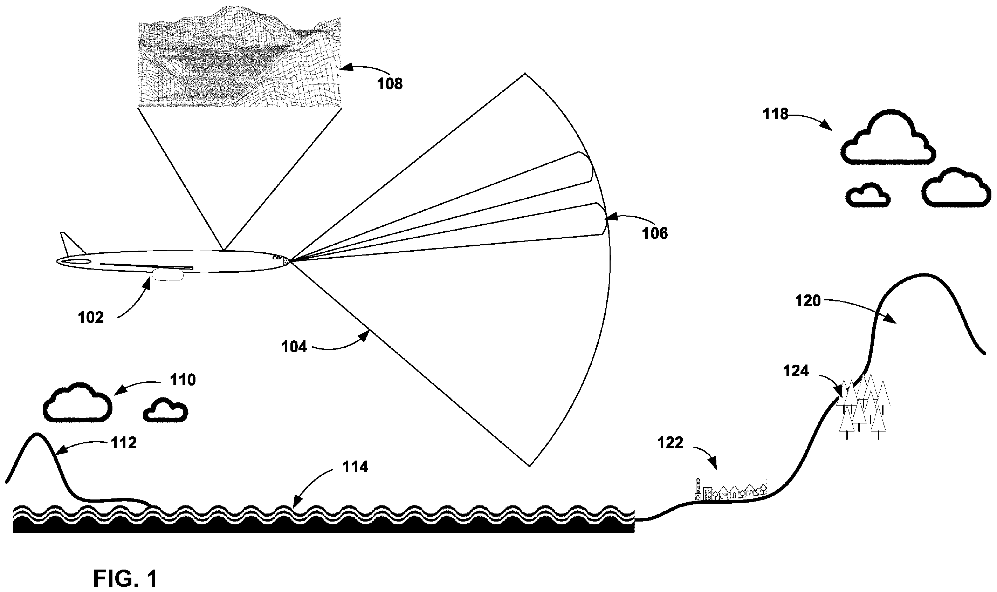

FIG. 1 is a conceptual diagram illustrating an example of an vehicle with a weather radar system in the vicinity of a variety of terrain types and weather. In the example of FIG. 1, vehicle 102, which includes a radar system, is flying in the vicinity of water 114, islands 112, other terrain 120 and weather 110 and 118. Although vehicle 102 is primarily depicted herein as an aircraft (e.g., a jet aircraft), vehicle 102 may include one or more other types of vehicles including, but are not limited to, ground-based vehicles, water-based vehicles, unmanned aerial vehicles (UAV), or stationary radar installations. In the example of unmanned vehicle, the flight crew may be located at a ground station and have access to a display, controlled by processing circuitry, that may display an indication of weather and terrain based on the reflected radar signals.

As discussed above, vehicle 102 includes a radar system, e.g., a weather radar system with a field of regard 104. In some examples, processing circuitry of the radar system may form digital receive beams 106 internal to the weather radar system, e.g., digital beam forming (DBF). Beams 106 may include one or more of a real beam, an electronically steered beam, or a digitally received beam. The radar system of vehicle 102 (not shown in FIG. 1) may also have access to a plurality of databases 108. Processing circuitry of the radar system may use information retrieved from the databases 108 to classify and display an indication of weather and terrain, including water, based on reflected radar returns in the field of regard (FOR) 104.

In some examples of radar systems, the radar system may misclassify reflected radar returns. For example, low clouds over water, e.g., clouds 110, may sometimes be misclassified as an island. Such a misclassification may cause confusion and unnecessary distraction for a flight crew, who may try to confirm the position of vehicle 102 based on the assumption that the radar displayed weather as an island. In contrast, the radar system of this disclosure may automatically use the information in the databases, in addition to DEM databases, to help classify the reflected radar returns. In this manner the system of this disclosure may improve information displayed to the flight crew, avoid unnecessary distraction, reduce workload, and thereby improve safety.

As discussed above, the plurality of databases 108 may include terrain type databases that includes information on the type of terrain, such as forests 124, grassland, shoreline, towns, and cities 122, hotels lining the shore of a lake or of island 112, rocky cliffs, savannah, rain forest, or any other type of terrain. Each different type of terrain may have a different radar cross section. For example, large buildings may have a different reflectivity reading compared to smaller buildings, wetlands may have different reflectivity reading than grass land, terraced farmland may have a different reflectivity reading than flat farmland, and so on.

Databases 108 may also include a DEM. In some examples a DEM is a representation of the bare ground topographic surface of the Earth excluding the types of terrain, such as trees, buildings, and any other surface objects. DEMs may be created from a variety of sources. For example, the United States Geological Survey (USGS) DEMs may be derived, at least in part, from topographic maps. In other examples, DEMs may be derived from high-resolution LIDAR and IfSAR data. LIDAR, which stands for Light Detection and Ranging, is a remote sensing method that uses light in the form of a pulsed laser to measure ranges (variable distances) to the Earth. Interferometric Synthetic Aperture Radar (IFSAR) data may be used for large area mapping, while LIDAR may be useful for higher precision smaller area mapping.

Some types of DEMs may include Digital Surface Model (DSM) and Digital Terrain Model (DTM) data. DSMs provide elevation values of landscape features on the earth's surface. This topographic product contains the height of the highest surface on the ground including vegetation, man-made structures, and bare earth. DTMs provide elevation values of the underlying terrain of the earth's surface. This topographic product reflects the height of bare earth where the elevations of vegetation and man-made features have been removed.

The processing circuitry of the radar system may determine characteristics of the reflected radar returns. Characteristics of the reflected radar return may include a target elevation, distance from the own ship vehicle, reflectivity, relative velocity, Doppler effect, and similar characteristics. Reflectivity may be described as echo intensity and may be measured in dBZ (decibels). In some examples, reflectivity may also be described as the amount of transmitted power returned to the radar receiver after hitting precipitation, terrain, or other target, compared to a reference power density at a specified distance, e.g., a distance of 1 meter from the radar antenna. As noted above, because the radar system of this disclosure has access to reflectivity for different types of terrain, in addition to information on the shape of terrain, such as from a DEM, the radar system may more accurately classify reflected radar returns as terrain, water, weather or clutter and display an accurate representation of targets in FOR 104 for vehicle 102. In this disclosure, a "target" is anything that may reflect transmitted radar energy, such as moisture in the atmosphere, e.g., rain and snow, terrain, a flock of birds, another vehicle, an indication of windshear, volcanic ash, and other similar targets.

Other examples of radar systems may group terrain settings and water settings. However, for the radar system of this disclosure, the terrain information and water information may be stored and processed separately. Weather, such as wind speed and direction, may affect the radar cross section of water. Larger waves from increased swell or higher winds may reflect more radar energy than a calm water surface. Also, the direction of the waves relative to the direction of the vehicle may also affect the reflectivity of the water.

The sea state describes the general characteristics of the surface of a body of water. Waves may be caused by swell and may independently be affected by the winds. Larger bodies of water, such as oceans, seas and large lakes may have both swell and wind effects on sea state. Sea state may be described using different scales, such as the Douglas scale and the Beaufort scale. A higher sea state may result in more radar energy reflected back to the radar system and more clutter and noise in the radar picture. The table below is an example of the Douglas scale to describe the sea state.

**Douglas scale - State of the sea (wind sea)**

| Degree | Height (m) | Description |
|---|---|---|
| 0 | no wave | Calm (Glassy) |
| 1 | 0-0.10 | Calm (Rippled) |
| 2 | 0.10 - 0.50 | Smooth |
| 3 | 0.50 - 1.25 | Slight |
| 4 | 1.25 - 2.50 | Moderate |
| 5 | 2.50-4.00 | Rough |
| 6 | 4.00 - 6.00 | Very Rough |
| 7 | 6.00 - 9.00 | High |
| 8 | 9.00 - 14.00 | Very High |
| 9 | 14.00+ | Phenomenal |

The radar system of this disclosure may retrieve the sea state information, e.g., from a weather broadcast, and along with the information from the other databases, e.g., type of terrain and DEM, may compare the information from the reflected radar energy to the seas state and use the information to classify the reflected radar energy.

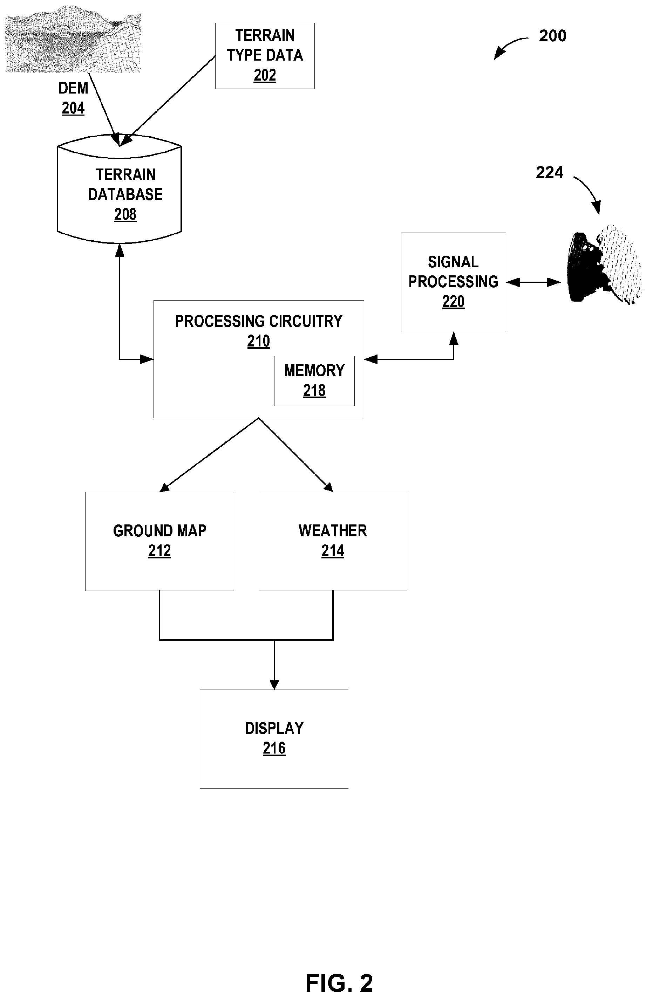

FIG. 2 is a block diagram illustrating an example system configured to distinguish and display indications of weather and terrain based on reflected radar return signals. System 200 in the example of FIG. 2 is an example of the radar system for vehicle 102 described above in relation to FIG. 1. In the example of FIG. 2, radar system 200 includes radar antenna 224, signal processing 220, processing circuitry 210 operatively coupled to memory 218, terrain database 208, which may include two or more databases, as described above in relation to FIG. 1. In the example of FIG .2, terrain database 208 includes DEM 204 and terrain type database 202, which also may include information on water location, shoreline information and other terrain types described above in relation to FIG. 1.

Signal processing 220 may receive reflected radar returns from antenna 224 and perform any of several signal processing steps, including amplification, down conversion to an intermediate frequency filtering, digital beam forming, and similar radar signal processing steps. System 200 also includes radar transmission signal generation and beam shaping, not shown in FIG. 2 for simplicity. In some examples, the circuitry of signal processing 220 may output the radar transmission signal to antenna 224 for transmission into the 3D volumetric region of the FOR. In some examples, signal processing 220 may be executed by processing circuitry 210. In other examples, the functions of signal processing 220 may be executed by processing circuitry separate from processing circuitry 210.

Examples of processing circuitry in system 200 may include any one or more of a microcontroller (MCU), e.g. a computer on a single integrated circuit containing a processor core, memory, and programmable input/output peripherals, a microprocessor (µP), e.g. a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry. Accordingly, the terms "processing circuitry," "processor" or "controller," as used herein, may refer to any one or more of the foregoing structures or any other structure operable to perform techniques described herein.

Examples of memory 218 may include any type of computer-readable storage media. include random access memory (RAM), read only memory (ROM), programmable read only memory (PROM), erasable programmable read only memory (EPROM), one-time programable (OTP) memory, electronically erasable programmable read only memory (EEPROM), flash memory, or another type of volatile or non-volatile memory device. In some examples the computer readable storage media may store instructions that cause the processing circuitry of system 200 to execute the functions described herein. In some examples, the computer readable storage media may store data, such as configuration information, temporary values and other types of data used to perform the functions of this disclosure.

As described above in relation to FIG. 1, in addition to information from DEM 204, terrain database 208 may include terrain type data 202, which may include radar reflectivity information about different types of terrain, e.g., a rocky mountain side, wetlands, man-made structures and other types of terrain that may be positioned at associated locations of DEM 204. The information in terrain database 208 may also include radar reflectivity for water positioned at associated locations of DEM 204, including how the reflectivity may change based on the weather, e.g., a sea state.

In some examples, processing circuitry 210 may determine whether the reflected radar energy is from a target, such as rain clouds, located over a body of water. In response to determining that the target is located over a body of water, determine the sea state of the body of water, e.g., by receiving information from weather broadcasts, as described above in relation to FIG. 1. In some examples, processing circuitry may use the received information to help determine whether radar returns may be clutter, e.g., reflected from waves and should be filtered out before displaying.

Although depicted as a single database in FIG. 2, terrain database 208 may be implemented as two or more databases operatively coupled to processing circuitry 210. In some examples, the database may be located onboard a vehicle, such as an vehicle. In other examples, the database may be remote from the vehicle and accessed as necessary during operation, or before traveling over a predetermined area.

Processing circuitry 210 may classify information from reflected radar returns for real-time display to the flight crew, or other vehicle operator. Processing circuitry 210 may filter clutter, false positives, using a variety of techniques to classify, annotate and display information that may be of value while operating the vehicle. In addition, processing circuitry 210 of this disclosure may use the information from terrain database 208 to classify information from the reflected radar returns. For example, a portion of the 3D volumetric airspace in the FOR of radar system 200 may receive radar returns that indicate precipitation, but also portions of the FOR that have characteristics of forested terrain. Processing circuitry 210 may use the information from terrain database 208 to confirm the location of the forested terrain, as well as the expect reflectivity characteristics. Based on the comparison, processing circuitry 210 may classify the terrain, assign information corresponding to one or more characteristics (e.g., corresponding reflectivity) to ground map 212, and assign the precipitation information to weather 214. Processing circuitry 210 may control display 216 to present the information to the flight crew, e.g., classified and annotated, such as with color, symbology, Doppler indications, and similar display characteristics.

In other words, processing circuitry of system 200, e.g., processing circuitry 210 may cause a radar transmitter to transmit radar energy via radar antenna 224. Radar antenna 224 may receive reflected radar energy from the transmitted radar energy, and signal processing 220 may process the reflected radar energy to determine characteristics of the reflected radar energy. Some examples of characteristics may include a target elevation, e.g., the height above ground of detected precipitation, wind shear or other targets. Other characteristics may include a relative distance from the own ship vehicle, reflectivity, relative direction of movement, Doppler effect, and similar characteristics.

Processing circuitry 210 may also retrieve information from terrain database 208, which includes terrain type data 202. Processing circuitry 210 may further compare the determined characteristics of the reflected radar energy to the retrieved information from the database. Based on both the characteristics of the reflected radar energy and the comparison to information from terrain database 208, processing circuitry 210 may assign the reflected radar energy, e.g., the information gleaned from the reflected radar energy, to one of ground map 212 or weather 214 for further display on a display device 216.

In some examples, display 216 may be any number of display devices. Some examples may include a multi-function display (MFD), a tablet computer, e.g., as part of an electronic flight bag (EFB), a display device dedicated to weather radar display. In some examples, display 216 may have controls for user input (not shown in FIG. 2) including touch screen, knobs, buttons, keypad, and other similar input controls.

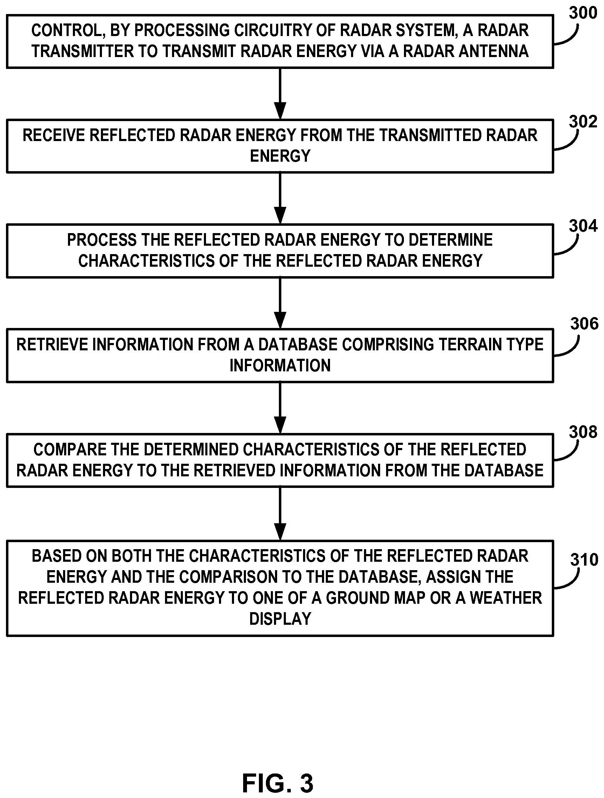

FIG. 3 is a flow chart illustrating an example operation of the radar system of this disclosure. The blocks of FIG. 3 will be described in terms of FIGS. 1 and 2.

Processing circuitry 210 of radar system 200, may control a radar transmitter to transmit radar energy via radar antenna 224 (300). In some examples, circuitry of signal processing 220 may include the radar transmission circuitry. In other examples, radar transmission circuitry may be located in a separate block from signal processing 220 (not shown in FIG. 2). The transmitted radar energy may cover the 3D volumetric airspace of FOR 104 of FIG. 1.

Radar system 200, via radar antenna 224 may receive the reflected radar energy from the transmitted radar energy, e.g., reflected from targets such as weather 118, terrain 120, and water 114 (302). Radar system 200 may amplify, down-convert, filter, and perform other steps on the received radar energy.

Signal processing 220, and/or processing circuitry 210 may process the reflected radar energy to determine characteristics of the reflected radar energy (304). Such characteristics may include range, bearing and elevation from the own ship vehicle of a target, such as rain clouds. In addition to the range, e.g., a relative distance from the own ship vehicle, for targets that are moving, the processing circuitry may also determine a relative direction of movement, including frequency changes indicating a Doppler effect. As described above in relation to FIG. 1, the processing circuitry of system 200 may also determine reflectivity and differences in reflectivity from the target.

Processing circuitry 210 may retrieve information from terrain database 208, which may include DEM 204 and terrain type 202 information (306). Some examples of information from terrain database 208 may include reflectivity for each terrain type, and/or sizes and dimensions of terrain at a geographic location. In some examples, terrain database 208 may include the name of the terrain type, which may be simply, forest, wetlands, tall buildings, and similar labels. In other examples, the name may include a particular place name for the terrain, such as Tongass National Forest, Daintree Forest, Waikiki hotels, or Everglades.

The processing circuitry may compare the determined characteristics of the reflected radar energy from signal processing 220 to the retrieved information from terrain database 208 (308). As described above in relation to FIGS. 1 and 2, the comparison may include whether the FOR includes water as well as the sea state of that water. Based on at least the characteristics of the reflected radar energy and the comparison to the database, the processing circuitry may determine whether the reflected radar returns are clutter, and should be filtered from the display. For radar returns determined not to be clutter, the processing circuitry may assign the reflected radar energy to one of a ground map or a weather display (310).

The techniques of this disclosure may also be described in the following examples.

Example 1. A radar system configured to be installed in a vehicle, the radar system comprising: a radar antenna configured to transmit radar energy and receive reflected radar energy from the transmitted radar energy; processing circuitry configured to: receive an indication of the reflected radar energy; process the reflected radar energy to determine characteristics of the reflected radar energy; retrieve information from a database comprising terrain type information; compare the determined characteristics of the reflected radar energy to the retrieved information from the database; based at least on the characteristics of the reflected radar energy and the comparison of the determined characteristics of the reflected radar energy to the retrieved information from the database, assign or apportion the reflected radar energy to at least one of a ground map or a weather display.

Example 2. The radar system of example 1, wherein characteristics of the reflected radar return comprises one or more of: a target elevation, a relative distance from the radar system, reflectivity, relative direction, or Doppler effect.

Example 3. The radar system of examples 1 or 2, wherein the processing circuitry is further configured to determine whether the reflected radar energy is from a target located over a body of water.

Example 4. The radar system of any of examples 1 - 3, wherein the processing circuitry is further configured to determine a sea state of the body of water in response to determining that the target is located over the body of water.

Example 5. The radar system of any of examples 1 - 4, wherein the information retrieved from the database comprises, for each terrain type, one or more of reflectivity, location, size, dimensions, or name of the terrain type.

Example 6. The radar system of any of examples 1 - 5, wherein the processing circuitry is further configured to: retrieve second information from the database comprising a digital elevation model (DEM), compare the determined characteristics of the reflected radar energy to the second information; based on the characteristics of the reflected radar energy and the comparison to the DEM, apportion the reflected radar energy to at least one of the ground map or the weather display.

Example 7. The radar system of any of examples 1 - 6, wherein the processing circuitry is further configured to, based on the characteristics of the reflected radar energy, determine whether to classify the reflected radar energy as one or more of clutter, weather, or terrain.

Example 8. A non-transitory computer-readable storage medium comprising instructions that, when executed, cause processing circuitry of a computing device to: control a radar transmitter to transmit radar energy via a radar antenna; receive reflected radar energy from the transmitted radar energy; process the reflected radar energy to determine characteristics of the reflected radar energy; retrieve information from a database comprising terrain type information; compare the determined characteristics of the reflected radar energy to the retrieved information from the database; based on both the characteristics of the reflected radar energy and the comparison of the determined characteristics of the reflected radar energy to the retrieved information from the database, apportion the reflected radar energy to at least one of a ground map or a weather display.

Example 9. The non-transitory computer-readable storage medium of example 8, wherein characteristics of the reflected radar return comprises one or more of: a target elevation, a relative distance, reflectivity, relative direction, or Doppler effect.

Example 10. The non-transitory computer-readable storage medium of examples 8 or 9, further comprising instructions for causing the processing circuitry to determine whether the reflected radar energy is from a target located over a body of water.

Example 11. The non-transitory computer-readable storage medium of any of examples 8 - 10, wherein the instructions cause the processing circuitry to determine a sea state of the body of water in response to determining that the target is located over the body of water.

Example 12. The non-transitory computer-readable storage medium of any of examples 8 - 11, wherein the information retrieved from the database comprises, for each terrain type: one or more of reflectivity, location, size, dimensions, or name of the terrain type.

Example 13. The non-transitory computer-readable storage medium of any of examples 8 - 12, wherein the instructions cause the processing circuitry to: retrieve second information from the database comprising a digital elevation model (DEM), compare the determined characteristics of the reflected radar energy to the retrieved second information from the database; based on the characteristics of the reflected radar energy and the comparison to the DEM, apportion the reflected radar energy to at least one of the ground map or the weather display.

Example 14. A method comprising: controlling, by processing circuitry of radar system, a radar transmitter to transmit radar energy via a radar antenna; receiving, by the processing circuitry, reflected radar energy from the transmitted radar energy; processing, by the processing circuitry, the reflected radar energy to determine characteristics of the reflected radar energy; retrieving, by the processing circuitry, information from a database comprising terrain type information; comparing, by the processing circuitry, the determined characteristics of the reflected radar energy to the retrieved information from the database; and based on both the characteristics of the reflected radar energy and the comparison of the determined characteristics of the reflected radar energy to the retrieved information from the database, apportioning, by the processing circuitry, the reflected radar energy to at least one of a ground map or a weather display.

Example 15. The method of example 14, wherein characteristics of the reflected radar return comprises one or more of: a target elevation, a relative distance from the radar system, reflectivity, relative direction, or Doppler effect.

Example 16. The method of examples 14 or 15, the method further comprising determining, by the processing circuitry, whether the reflected radar energy is from a target located over a body of water.

Example 17. The method of any of examples 14 - 16, further comprising determining, by the processing circuitry, the sea state of the body of water in response to determining that the target is located over the body of water.

Example 18. The method of any of examples 14 - 17, wherein the information in retrieved from the database comprises, for each terrain type, one or more of: reflectivity, location, size, dimensions, or name of the terrain type.

Example 19. The method of any of examples 14 - 18, further comprising: retrieving by the processing circuitry, second information from the database comprising a digital elevation model (DEM), comparing, by the processing circuitry, the determined characteristics of the reflected radar energy to the retrieved second information from the database; and based on the characteristics of the reflected radar energy and the comparison to the DEM, apportioning, by the processing circuitry, the reflected radar energy to at least one of the ground map or the weather display.

Example 20. The method of any of examples 14 - 19, further comprising: determining, by the processing circuitry and based on the characteristics of the reflected radar energy, whether to classify the reflected radar energy as one or more of clutter, weather, or terrain.

In one or more examples, the functions described above may be implemented in hardware, software, firmware, or any combination thereof. For example, the various components of FIGS. 1 and 2, such as signal processing 220 and processing circuitry 210may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor" and "processing circuitry," as used herein, may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples of the disclosure have been described. These and other examples are within the scope of the following claims.

## Claims

1. A radar system configured to be installed in a vehicle, the radar system comprising:
a radar antenna configured to transmit radar energy and receive reflected radar energy from the transmitted radar energy;
processing circuitry configured to:
receive an indication of the reflected radar energy;
process the reflected radar energy to determine characteristics of the reflected radar energy;
retrieve information from a database comprising terrain type information;
compare the determined characteristics of the reflected radar energy to the retrieved information from the database; and
based at least on the characteristics of the reflected radar energy and the comparison of the determined characteristics of the reflected radar energy to the retrieved information from the database, apportion the reflected radar energy to at least one of a ground map or a weather display.

2. The radar system of claim 1, wherein characteristics of the reflected radar return comprises one or more of: a target elevation, a relative distance from the radar system, reflectivity, relative direction, or Doppler effect.

3. The radar system of any of claims 1 or 2, wherein the processing circuitry is further configured to determine whether the reflected radar energy is from a target located over a body of water.

4. The radar system of claim 3, wherein the processing circuitry is further configured to determine a sea state of the body of water in response to determining that the target is located over the body of water.

5. The radar system of any of claims 1-4, wherein the information retrieved from the database comprises, for each terrain type, one or more of reflectivity, location, size, dimensions, or name of the terrain type.

6. The radar system of any of claims 1-5, wherein the processing circuitry is further configured to:
retrieve second information from the database comprising a digital elevation model (DEM),
compare the determined characteristics of the reflected radar energy to the second information; and
based on the characteristics of the reflected radar energy and the comparison to the DEM, apportion the reflected radar energy to at least one of the ground map or the weather display.

7. The radar system of any of claims 1-6, wherein the processing circuitry is further configured to, based on the characteristics of the reflected radar energy, determine whether to classify the reflected radar energy as one or more of clutter, weather, or terrain.

8. A non-transitory computer-readable storage medium comprising instructions that, when executed, cause processing circuitry of a computing device to:
control a radar transmitter to transmit radar energy via a radar antenna;
receive reflected radar energy from the transmitted radar energy;
process the reflected radar energy to determine characteristics of the reflected radar energy;
retrieve information from a database comprising terrain type information;
compare the determined characteristics of the reflected radar energy to the retrieved information from the database; and
based on both the characteristics of the reflected radar energy and the comparison of the determined characteristics of the reflected radar energy to the retrieved information from the database, apportion the reflected radar energy to at least one of a ground map or a weather display.

9. The non-transitory computer-readable storage medium of claim 8, wherein characteristics of the reflected radar return comprises one or more of: a target elevation, a relative distance, reflectivity, relative direction, or Doppler effect.

10. The non-transitory computer-readable storage medium of any of claims 8 or 9, further comprising instructions for causing the processing circuitry to determine whether the reflected radar energy is from a target located over a body of water.

11. The non-transitory computer-readable storage medium of claim 10, wherein the instructions cause the processing circuitry to determine a sea state of the body of water in response to determining that the target is located over the body of water.

12. The non-transitory computer-readable storage medium of any of claims 8-11, wherein the information retrieved from the database comprises, for each terrain type: one or more of reflectivity, location, size, dimensions, or name of the terrain type.

13. The non-transitory computer-readable storage medium of any of claims 8-12, wherein the instructions cause the processing circuitry to:
retrieve second information from the database comprising a digital elevation model (DEM),
compare the determined characteristics of the reflected radar energy to the retrieved second information from the database; and
based on the characteristics of the reflected radar energy and the comparison to the DEM, apportion the reflected radar energy to at least one of the ground map or the weather display.

14. A method comprising:
controlling, by processing circuitry of radar system, a radar transmitter to transmit radar energy via a radar antenna;
receiving, by the processing circuitry, reflected radar energy from the transmitted radar energy;
processing, by the processing circuitry, the reflected radar energy to determine characteristics of the reflected radar energy;
retrieving, by the processing circuitry, information from a database comprising terrain type information;
comparing, by the processing circuitry, the determined characteristics of the reflected radar energy to the retrieved information from the database; and
based on both the characteristics of the reflected radar energy and the comparison of the determined characteristics of the reflected radar energy to the retrieved information from the database, apportioning, by the processing circuitry, the reflected radar energy to at least one of a ground map or a weather display.

15. The method of claim 14, further comprising:
retrieving, by the processing circuitry, second information from the database comprising a digital elevation model (DEM),
comparing, by the processing circuitry, the determined characteristics of the reflected radar energy to the retrieved second information from the database; and
based on the characteristics of the reflected radar energy and the comparison to the DEM, apportioning, by the processing circuitry, the reflected radar energy to at least one of the ground map or the weather display.
